# EUROPEAN PATENT APPLICATION

(11) **EP 4 467 370 A1**
(43) Date of publication of application: **27.11.2024**
(21) Application number: 23743214.1
(22) Date of filing: 16.01.2023
(51) Int. Cl.: B60J 1/00, B60R 1/00

(54) **VEHICLE GLASS MODULE**

(30) Priority: 21.01.2022 JP 2022008187
(71) Applicant: Nippon Sheet Glass Company, Limited, Tokyo 108-6321 (JP)
(72) Inventor: TOKIWA, Junichi, Tokyo 108-6321 (JP)
(74) Representative: Stanley, Andrew Thomas
(86) International application number: PCT/JP2023/000997
(87) International publication number: WO 2023/140220

(57) **Abstract**

A vehicle glass module (100) for supporting an information obtainer in a vehicle includes a glass substrate (1) having an outer surface (1A) and an inner surface (1B), and a bracket (6) having a first surface (6A) bonded to the inner surface (1B) of the glass substrate (1) with a bonding member (71) and a second surface (6B) opposite to the glass substrate (1). The bracket (6) includes a support (72) connected to the bonding member (71). The support (72) is in contact with the second surface (6B) and supports a weight of the bracket (6).

## Description

### FIELD

The present invention relates to a vehicle glass module for supporting an information obtainer in a vehicle.

### BACKGROUND

Recent vehicles such as automobiles incorporate many information obtainers including cameras or sensors. Such vehicles have highly convenient driving assistance in, for example, lane keeping or collision avoidance based on information obtained from these information obtainers. Such information obtainers, which are notable elements in the development of autonomous driving techniques, are to be fixed at various positions in a vehicle, such as on a rear surface of the windshield, and are supported using known vehicle glass modules (refer to, for example, Patent Literature 1).

A vehicle glass module described in Patent Literature 1 includes a glass substrate including a laminated glass plate, and a bracket including an engagement member in the form of a hook. The bracket has one end face attached with an adhesive to an inner surface of the glass substrate, and the other end face received in a part of an intermediate film of the glass substrate. An information obtainer (information device in the patent literature) is fixed to the bracket. The engagement member prevents the bracket from dropping.

### CITATION LIST

### PATENT LITERATURE

Patent Literature 1: WO 2017/188412

### BRIEF SUMMARY

### TECHNICAL PROBLEM

The vehicle glass module described in Patent Literature 1 includes the bracket with the engagement member to prevent a drop of the bracket. However, the glass substrate is to be processed for engagement with the engagement member. This decreases the manufacturing efficiency. Further, the information obtainer is heavy. Thus, the bonding strength of the adhesive between the end face of the bracket and the inner surface of the glass substrate is to be increased.

One or more aspects are directed to a vehicle glass module including a bracket with a simple structure that is appropriately supported on a glass substrate.

### SOLUTION TO PROBLEM

A vehicle glass module according to an aspect of the present invention is for supporting an information obtainer in a vehicle. The vehicle glass module includes a glass substrate having an outer surface and an inner surface, and a bracket having a first surface bonded to the inner surface of the glass substrate with a bonding member and a second surface opposite to the glass substrate. The bracket includes a support connected to the bonding member. The support is in contact with the second surface and supports a weight of the bracket.

To fix the bracket to the inner surface of the glass substrate, the vehicle glass module with the above structure includes the bonding member bonding the first surface of the bracket to the inner surface of the glass substrate, and the support connected to the bonding member and in contact with the second surface of the bracket. The first surface of the bracket is adjacent to the glass substrate, and the second surface of the bracket is opposite to the glass substrate. This allows the bracket to be bonded to the glass substrate with the bonding member, and allows the bracket to be held by the support connected to the bonding member. In particular, when the vehicle glass module 100 is, for example, exposed to sunlight or has a large temperature difference in a short time between the inside and the outside of the vehicle during air conditioning in the vehicle, the bonding member repeatedly contracts and expands. The bonding strength between the bracket and the bonding member may be then lower than the bonding strength between the glass substrate and the bonding member, possibly causing the bracket supporting the load of the heavy information obtainer to drop. In the above structure, the support is connected to the bonding member and is in contact with the second surface of the bracket to support the weight of the bracket. The support connected to the bonding member thus remains in contact with the second surface of the bracket when the bracket detaches from the bonding member. This prevents the bracket from dropping. The bracket includes the support in contact with the second surface of the bracket. This simple structure appropriately supports the bracket on the glass substrate.

In another aspect, the bonding member is an adhesive. The support contains the same material as the adhesive, and the support is continuous with the adhesive.

In the above structure, the bonding member is an adhesive. The support connected to the bonding member contains the same material as the bonding member. The support is continuous with the adhesive. Thus, the support has a simple structure. When each of the bonding member and the support is an adhesive, the support is firmly connected to the bonding member. This structure more appropriately supports the bracket on the glass substrate.

In another aspect, the bracket has at least one through-hole connecting the first surface with the second surface. The bonding member and the support are connected to each other through the at least one through-hole. The bonding member is disposed in the at least one through-hole and in an area of the first surface, and the area is adjacent to the at least one through-hole. The support is disposed in the at least one through-hole and in an area of the second surface, and the area is adjacent to the at least one through-hole.

In the above structure, the bonding member and the support are connected through the at least one through-hole in the bracket. This structure easily connects the bonding member and the support to each other. Further, the area of the first surface is connected to the area of the second surface of the bracket through the at least one through-hole, allowing the support to support the bracket more firmly.

In another aspect, the bracket has the at least one through-hole being a plurality of through-holes. The support connects the plurality of through-holes with one another on the second surface.

In the above structure, the support connects the plurality of through-holes with one another on the second surface to increase the connection between the bonding member and the support. This structure more appropriately supports the bracket on the glass substrate.

In another aspect, the at least one through-hole is flared from the first surface toward the second surface.

When each of the plurality of through-holes in the bracket is flared from the first surface toward the second surface of the bracket as in the above structure, the through-hole has a diameter increasing toward the second surface. This allows the support in contact with the second surface of the bracket to be guided along the flared portion in the corresponding through-hole and placed closer to the bonding member. The support is thus more easily connected to the bonding member in the corresponding through-hole. When the bonding member is, for example, an adhesive, and when the bracket is simply pressed against the glass substrate with the adhesive between the first surface of the bracket and the glass substrate, the adhesive filled in each of the plurality of through-holes is placed closer to the second surface of the bracket. This allows the support to be easily connected to the bonding member.

In another aspect, the second surface includes a protrusion protruding away from the first surface. The support is in contact with the protrusion.

When the second surface of the bracket includes the protrusion protruding away from the first surface and when the support is in contact with the protrusion as in the above structure, the support can be connected to the bonding member through the protrusion on the bracket. This increases the area of contact of the bonding member and the support with the bracket. The protrusion protrudes from the second surface of the bracket. The information obtainer may thus be attached to the protrusion. In this case, the protrusion is likely to receive a concentrated load of the information obtainer. The support in contact with the protrusion can reliably prevent the bracket from dropping. The bracket can thus be held more firmly by the bonding member and the support.

In another aspect, the support is continuous with an area of the second surface, and the area is adjacent to the protrusion.

In the above structure, the support is in contact with the extended area of the second surface of the bracket, allowing the bracket to be held still more firmly by the support.

In another aspect, the bracket has a through-hole connecting the first surface with the second surface. The protrusion protrudes from an outer edge of the through-hole.

When the bracket has the through-hole connecting the first surface with the second surface, and when the protrusion protrudes from the outer edge of the through-hole as in the above structure, the bonding member and the support can be connected in the through-hole and inside the protrusion continuous with the through-hole. This reliably connects the bonding member and the support to each other.

In another aspect, the protrusion is on an outer edge of the bracket.

When, for example, the information obtainer is attached to the bracket and supported, the bracket is likely to receive a greater load of the information obtainer at outer edge positions of the bracket. In the above structure, the protrusion is on the outer edge of the bracket. This structure allows the protrusion to increase the strength of the outer edge of the bracket and allows the support placed on the protrusion to appropriately support the bracket.

In another aspect, the protrusion is on an outer edge of the bracket. The protrusion has a connection hole extending through the protrusion in a direction intersecting with a direction in which the protrusion protrudes. The support includes the bonding member entering the connection hole.

In the above structure, the support includes the bonding member entering the connection hole in the protrusion on the outer edge of the bracket. The bonding member in the connection hole can thus support the bracket still more firmly.

In another aspect, the bonding member has a smaller difference in linear expansion coefficient with the support than with the first surface.

In the above structure, when the bonding member has a smaller difference in linear expansion coefficient with the support than with the first surface of the bracket, and when the vehicle glass module is affected by varying temperatures resulting from, for example, exposure to sunlight, the bonding member has a smaller shearing stress with the support than with the first surface of the bracket. In the above structure, when the bonding strength between the bracket and the bonding member is reduced, the support connected to the bonding member can support the bracket to prevent the bracket from dropping. This structure more appropriately supports the bracket on the glass substrate.

In another aspect, the support includes a plurality of members containing different materials.

When the support includes multiple members containing different materials as in the above structure, the support may include members selected appropriately for the respective areas of the support. For example, a member for a connection area of the support with the bonding member may be different from a member for an area of the support in contact with the second surface of the bracket.

In another aspect, the support includes a member containing a material different from a material of the bonding member.

In the above structure, when the support is a member containing a different material from the bonding member, the support can be a member selected from a wider range of members. The member as the support can be appropriately selected based on, for example, the weight of the device to be attached to the bracket.

### BRIEF DESCRIPTION OF DRAWINGS

FIG. 1 is a cross-sectional view of a vehicle glass module being attached.
FIG. 2 is a cross-sectional view of a vehicle glass module according to a first embodiment, showing its main components.
FIG. 3 is a diagram of a bracket in the first embodiment as viewed from inside a vehicle.
FIG. 4 is a cross-sectional view of a vehicle glass module according to a first modification of the first embodiment, showing its main components.
FIG. 5 is a plan view of a vehicle glass module according to a second modification of the first embodiment, showing its main components.
FIG. 6 is a cross-sectional view of the vehicle glass module according to the second modification of the first embodiment, showing its main components.
FIG. 7 is a cross-sectional view of a vehicle glass module according to a third modification of the first embodiment, showing its main components.
FIG. 8 is a cross-sectional view of a vehicle glass module according to a second embodiment, showing its main components.
FIG. 9 is a cross-sectional view of a vehicle glass module according to a modification of the second embodiment, showing its main components.
FIG. 10 is a cross-sectional view of a vehicle glass module according to a third embodiment, showing its main components.
FIG. 11 is a cross-sectional view of a vehicle glass module according to a modification of the third embodiment, showing its main components.
FIG. 12 is a cross-sectional view of a vehicle glass module according to a fourth embodiment, showing its main components.
FIG. 13 is a cross-sectional view of a vehicle glass module according to a first modification of the fourth embodiment, showing its main components.
FIG. 14 is a cross-sectional view of a vehicle glass module according to a second modification of the fourth embodiment, showing its main components.
FIG. 15 is a cross-sectional view of a vehicle glass module according to a third modification of the fourth embodiment, showing its main components.
FIG. 16 is a cross-sectional view of a vehicle glass module according to a fourth modification of the fourth embodiment, showing its main components.

### DETAILED DESCRIPTION

A vehicle glass module according to one embodiment of the present invention will be described below with reference to the drawings. In the present embodiment, a vehicle glass module 100 for supporting an information obtainer in an automobile (an example of a vehicle) will be described as an example of a vehicle glass module. The structure is not limited to the embodiments below and may be modified in various manners without departing from the spirit and scope of the invention. The direction of gravity may be hereafter referred to as downward, and the direction opposite to the direction of gravity may be referred to as upward.

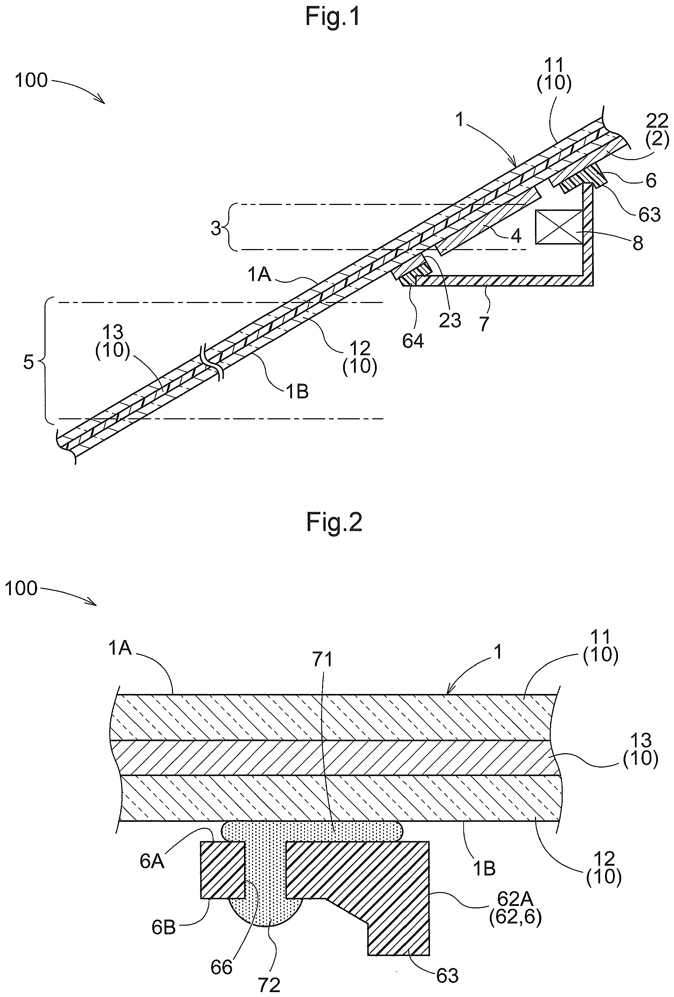

As shown in FIG. 1, the vehicle glass module 100 includes a glass substrate 1 as a windshield of the automobile, and a bracket 6 in the form of a frame. The bracket 6 can receive a cover 7 to which an information obtainer is attached. The information obtainer at least irradiates or receives light to obtain information from outside the vehicle. The cover 7 has an L-shaped cross section, and the information obtainer is fixed to a vertically extending side wall of the cover 7. The cover 7 holds a camera 8, and is attached to the bracket 6 from inside the vehicle after a harness (not shown) or other components are attached to the bracket 6. This allows the camera 8 to be accommodated in a space defined by the bracket 6, the cover 7, and the glass substrate 1.

The glass substrate 1 includes a laminated glass plate 10 and a shield layer 2 disposed along the peripheral edge of an inner surface of the laminated glass plate 10 to block viewing from outside the vehicle.

In the present embodiment, the camera 8 (imaging device) as an example of an information obtainer is attached to the inside of the vehicle. When the camera 8 is attached to the inside of the vehicle, an information obtaining area 3 facing the camera 8 in an opening 23 is defined on the glass substrate 1 to allow passage of light. The camera 8 includes an image sensor, such as a charge-coupled device (CCD) or a complementary metal-oxide semiconductor (CMOS), and lenses, and captures images of the surroundings of the vehicle through the information obtaining area 3. The images captured by the camera 8 are transmitted to an engine control unit, or ECU (not shown), installed on the vehicle. Automobile driving assistance is implemented based on commands from the ECU.

An area different from the information obtaining area 3 includes a view area 5. The view area 5 is used for a driver driving the automobile to check traffic conditions. The view area 5 is disposed on the glass substrate 1 inward from the shield layer 2 in a planar direction of the glass substrate 1.

In the information obtaining area 3, an antifogging film 4 may be attached to the surface of the glass substrate 1 facing inside the vehicle to reduce light transmission. The antifogging film 4 allows the information obtaining area 3 to have less light transmission than the view area 5.

The laminated glass plate 10 includes an outer glass plate 11 facing outside the vehicle, an inner glass plate 12 facing inside the vehicle, and an intermediate film 13 between the outer glass plate 11 and the inner glass plate 12. The intermediate film 13 bonds the surface of the outer glass plate 11 facing outside the vehicle to the surface of the inner glass plate 12 facing inside the vehicle. The glass substrate 1 has an outer surface 1A on the outer glass plate 11 and an inner surface 1B on the inner glass plate 12.

In the present embodiment, the outer glass plate 11 is curved to define a convex surface facing outside the vehicle, and the inner glass plate 12 is curved to define a concave surface facing inside the vehicle. Each of the outer glass plate 11 and the inner glass plate 12 is, for example, a plate of heat absorbing glass, clear glass, green glass, or UV green glass.

The intermediate film 13 is held between the outer glass plate 11 and the inner glass plate 12, and bonds the outer glass plate 11 and the inner glass plate 12 together. The intermediate film 13 may have a three-layer structure with a softer core layer held between a pair of outer harder layers. The intermediate film 13 with the multi-layer structure of the softer layer and the harder layers increases the breakage resistance and sound insulation performance of the glass substrate 1. For the intermediate film 13 with the above multi-layer structure of layers having different hardness, the outer harder layers may be formed from a polyvinyl butyral (PVB) resin. The PVB resin has higher adhesion and higher penetration resistance, and may thus be used as a material for the outer layers. The softer core layer may be formed from an ethylene vinyl acetate (EVA) resin, or a polyvinyl acetal resin that is softer than the PVB resin used for the outer layers.

The shield layer 2 is a dark-colored ceramic laminate. The shield layer 2 includes a bracket receiving area 22 extending inward from the center of the upper peripheral side of the laminated glass plate 10 in the planar direction. The bracket 6 is in the form of a frame and is bonded with a bonding member 71 (refer to FIG. 2) to the bracket receiving area 22 with no ceramic laminate in the shield layer 2 to surround the opening 23. To reliably block light and prevent deterioration of the bonding member 71, the shield layer 2 may have a thickness of, for example, 20 to 100 µm.

As shown in FIGs. 1 to 3, the bracket 6 is in the form of a rectangular frame including an attachment opening 61 to receive the cover 7 holding the camera 8. The bracket 6 includes a rectangular body 62 surrounding the attachment opening 61. The body 62 has an upper side 62A, a lower side 62B, a left side 62C, and a right side 62D. The upper side 62A has an outer edge 62A1 at its upper end, and the lower side 62B has an outer edge 62B1 at its lower end. The body 62 includes a first protrusion 63 (an example of a protrusion) on the upper side 62A for contact with an upper end of the cover 7, a second protrusion 64 (an example of the protrusion) on the lower side 62B for contact with a lower end of the cover 7, and engagements 65 for supporting and fixing the cover 7 on the left side 62C and the right side 62D.

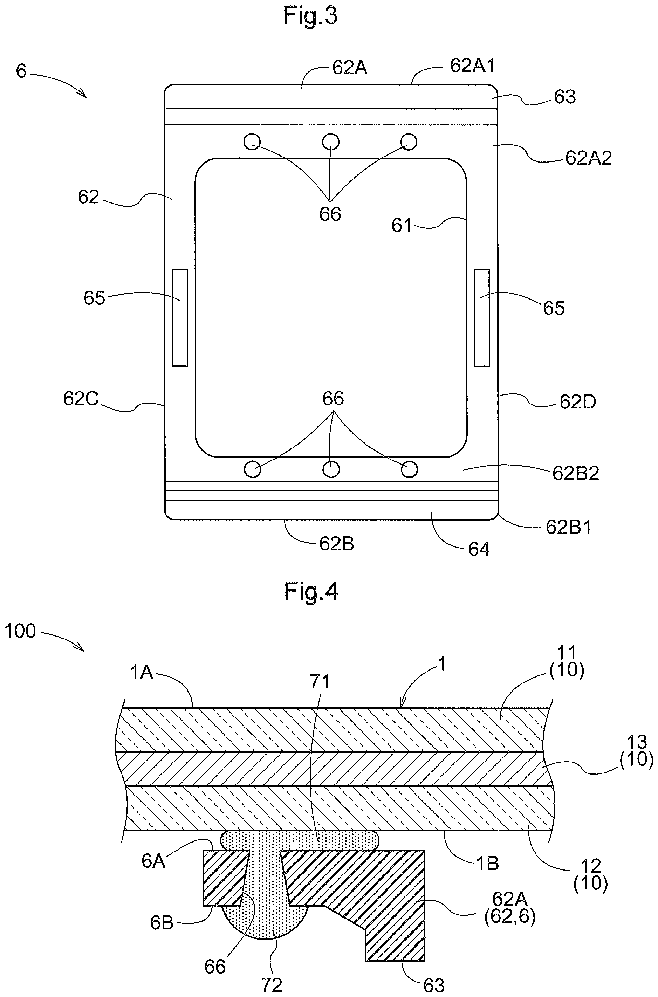

As shown in FIG. 1, the bracket 6 surrounds the opening 23 in the shield layer 2. As shown in FIG. 2, the bracket 6 has a first surface 6A bonded to the inner surface 1B of the glass substrate 1 with the bonding member 71, and a second surface 6B opposite to the glass substrate 1. The first surface 6A of the bracket 6 is flat, and the bonding member 71 is in close contact with the first surface 6A. The body 62 is bonded to the shield layer 2 (bracket receiving area 22) or to the glass substrate 1 with the bonding member 71. In this structure, the bracket 6 is fixed to the shield layer 2 (bracket receiving area 22) to be entirely or at least partially shielded by the shield layer 2. The shield layer 2 laminated on the inner glass plate 12 of the laminated glass plate 10 is not shown in the vehicle glass module 100 in FIG. 2 (the same applies to FIG. 4 and subsequent figures).

The bracket 6 is formed from a material containing a thermoplastic resin. Examples of the thermoplastic resin include a polybutylene terephthalate (PBT) resin, a polypropylene (PP) resin, a polyethylene (PE) resin, a polycarbonate (PC) resin, a polyamide (PA) resin, and a synthetic resin such as a combination of the above thermoplastic resins or a combination of the above thermoplastic resins and other types of resin. The bracket 6 containing such a thermoplastic resin softens under heat and is elastic at room temperature, and is thus easily molded under heat. The bracket 6 may be specifically formed from a thermoplastic polyester resin material with an ester bonding structure. Examples of the thermoplastic polyester resin include a PBT resin and a polyethylene terephthalate (PET) resin. An additive to mix with a thermoplastic resin may be, for example, an inorganic filler. With a thermoplastic resin containing an inorganic filler, the bracket 6 can have higher heat resistance and strength.

As shown in FIGs. 2 and 3, the bracket 6 has through-holes 66 connecting the first surface 6A with the second surface 6B. In the present embodiment, as shown in FIG. 3, multiple (three in the present embodiment) through-holes 66 are arranged at intervals in each of the upper side 62A and the lower side 62B of the body 62. The multiple through-holes 66 are disposed in a lower area 62A2 of the upper side 62A below the first protrusion 63, and in an upper area 62B2 of the lower side 62B above the second protrusion 64.

As shown in FIG. 2, the bracket 6 includes a support 72 connected to the bonding member 71. The support 72 is in contact with the second surface 6B and supports the weight of the bracket 6. The bonding member 71 on the first surface 6A and the support 72 on the second surface 6B are connected through the through-holes 66. The bonding member 71 is disposed in the through-holes 66 and in an area of the first surface 6A, and the area is adjacent to the through-holes 66. The support 72 is disposed in the through-holes 66 and in an area of the second surface 6B, and the area is adjacent to the through-holes 66.

The bonding member 71 on the first surface 6A of the bracket 6 is an adhesive. The support 72 on the second surface 6B is formed from the same material as the adhesive as the bonding member 71. The support 72 is continuous with the adhesive. Each of the bonding member 71 and the support 72 is an adhesive in the form of fluid having a predetermined viscosity and may be, for example, a urethane resin adhesive or an epoxy resin adhesive. In particular, an epoxy resin adhesive has higher viscosity, and is less likely to flow. The bonding member 71 and the support 72 may be a single layer without a primer layer as an adhesion aid. The bonding member 71 and the support 72 as a single layer with no primer layer can reduce work-hours for bonding. Further, the bonding member 71 and the support 72 as a single layer can avoid concerns such as instability of materials at the interface between the layers, unlike the bonding member 71 and the support 72 as a multi-layer including a primer layer.

A method for manufacturing the vehicle glass module 100 includes a glass plate forming process, a bracket molding process, and a bonding process.

In the glass plate forming process, the glass substrate 1 with the shield layer 2 is manufactured. First, each of the outer glass plate 11 and the inner glass plate 12 is cut into a predetermined shape. A ceramic material as the shield layer 2 is then printed (applied) on the surface of the inner glass plate 12 facing inside the vehicle by, for example, screen printing (also refer to FIG. 1). Subsequently, each of the glass plates 11 and 12 is heated in a furnace to near a softening point temperature, is curved at its center to form a curved surface under its weight or by pressing, is loaded into a slow cooling furnace for a slow cooling treatment, and unloaded from the slow cooling furnace to be left to cool down. The intermediate film 13 is then placed between the glass plates 11 and 12 to form a laminate. The laminate is pre-bonded, and then bonded by autoclaving. This produces the glass substrate 1 that is curved and includes the shield 2 with the opening 23.

In the bracket molding process, a thermoplastic resin is poured into a mold for a known injection molding process. This forms the bracket 6 with the first surface 6A as a smooth flat surface.

In the bonding process, the bonding member 71 is applied to, for example, the upper side 62A and the lower side 62B of the first surface 6A of the bracket 6, and double-sided tape (not shown) is attached to the left side 62C and the right side 62D. The first surface 6A of the bracket 6 is placed to surround the opening 23 in the shield layer 2c, and bonded to the shield layer 2 in the glass substrate 1 with the bonding member 71 and the double-sided tape. In this state, the double-sided tape is instantly bonded to the glass substrate 1, and the bracket 6 is prefixed to the glass substrate 1. In this state, the upper side 62A and the lower side 62B are in contact with the shield layer 2, allowing the bonding member 71 to spread along the first surface 6A to fill the through-holes 66 and overflow from the through-holes 66 to the second surface 6B. The bonding member 71 then spreads continuously to the second surface 6B adjacent to the through-holes 66. When the bonding member 71 remains in the through-holes 66, an adhesive of the same material as the bonding member 71 fills the through-holes 66 from the second surface 6B, and spreads continuously from the through-holes 66 to the second surface 6B adjacent to the through-holes 66.

After a predetermined period of time passes, the bonding member 71 in the form of fluid solidifies, firmly fixing the upper side 62A and the lower side 62B of the first surface 6A of the bracket 6 to the glass substrate 1. Further, the bonding member 71 spread to the second surface 6B forms the support 72. The support 72 is in contact with the second surface 6B to support the weight of the bracket 6.

Subsequently, the camera 8 is attached to the bracket 6. The cover 7 is finally attached to the engagements 65 on the bracket 6. This completes manufacture of the vehicle glass module 100 for supporting the camera 8 disposed in the vehicle.

To fix the bracket 6 to the inner surface 1B of the glass substrate 1, the vehicle glass module 100 according to the present embodiment includes the bonding member 71 bonding the first surface 6A of the bracket 6 to the inner surface 1B of the glass substrate 1, and the support 72 connected to the bonding member 71 and in contact with the second surface 6B of the bracket 6. This allows the bracket 6 to be bonded to the glass substrate 1 with the bonding member 71, and allows the bracket 6 to be held by the support 72 connected to the bonding member 71. In particular, when the vehicle glass module 100 is, for example, exposed to sunlight or has a large temperature difference in a short time between the inside and the outside of the vehicle during air-conditioning in the vehicle, the bonding member 71 repeatedly contracts and expands. The bonding strength between the bracket 6 and the bonding member 71 may then be lower than the bonding strength between the glass substrate 1 and the bonding member 71, possibly causing the bracket 6 supporting the load of the heavy camera 8 to drop. In the present embodiment, the support 72 is connected to the bonding member 71 and is in contact with the second surface 6B of the bracket 6 to support the weight of the bracket 6. The support 72 connected to the bonding member 71 thus remains in contact with the second surface 6B of the bracket 6 when the bracket 6 detaches from the bonding member 71. This prevents the bracket 6 from dropping. The bracket 6 includes the support 72 in contact with the second surface 6B of the bracket 6. This simple structure appropriately supports the bracket 6 on the glass substrate 1.

In the present embodiment, the bonding member 71 is an adhesive. The support 72 connected to the bonding member 71 is formed from the same material as the bonding member 71 (adhesive). The support 72 is continuous with the bonding member 71 (adhesive). Thus, the support 72 has a simple structure. When each of the bonding member 71 and the support 72 is an adhesive, the support 72 is firmly connected to the bonding member 71. This structure more appropriately supports the bracket 6 on the glass substrate 1.

In the present embodiment, the bonding member 71 and the support 72 are connected through the through-holes 66 in the bracket 6. This structure easily connects the bonding member 71 and the support 72 to each other. Further, the area of the first surface 6A of the bracket 6 is connected to the area of the second surface 6B of the bracket 6 through the through-holes 66, allowing the support 72 to support the bracket 6 more firmly.

### First Modification of First Embodiment

As shown in FIG. 4, each through-hole 66 may be flared from the first surface 6A toward the second surface 6B. When each through-hole 66 in the bracket 6 is flared from the first surface 6A toward the second surface 6B of the bracket 6 as in a first modification, the through-hole 66 has a diameter increasing toward the second surface 6B. This allows the support 72 in contact with the second surface 6B of the bracket 6 to be guided along the flared portion in the corresponding through-hole 66 and placed closer to the bonding member 71. The support 72 is thus more easily connected to the bonding member 71 in the corresponding through-hole 66.

When the bonding member 71 is, for example, an adhesive, and when the bracket 6 is simply pressed against the glass substrate 1 with the adhesive (bonding member 71) between the first surface 6A of the bracket 6 and the glass substrate 1, the adhesive (bonding member 71) filled in each through-hole 66 is placed closer to the second surface 6B of the bracket 6. This allows the support 72 to be easily connected to the bonding member 71.

### Second Modification of First Embodiment

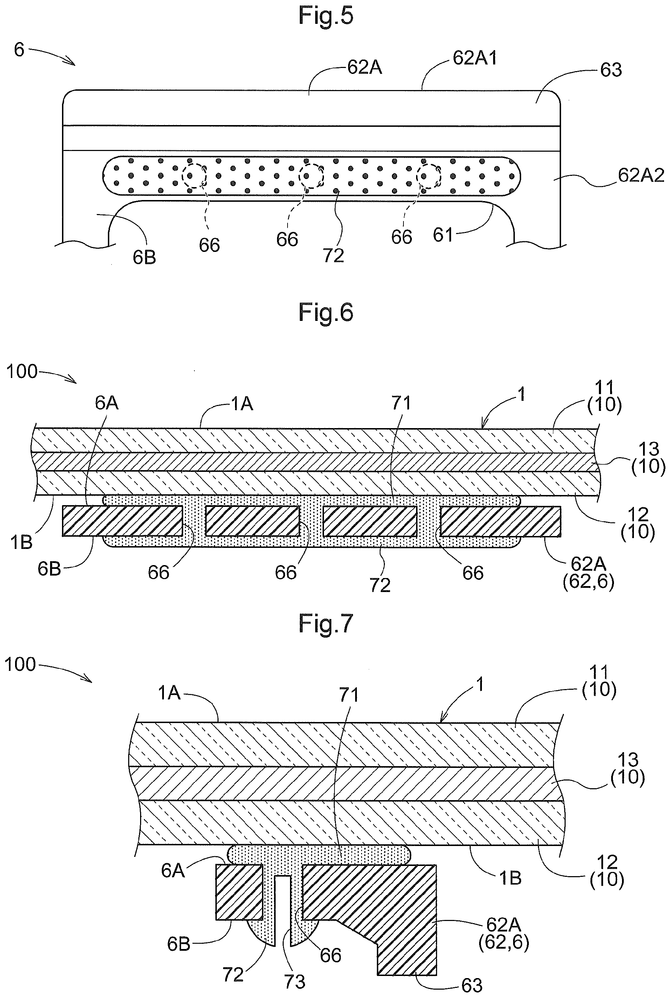

In the bracket 6, as shown in FIGs. 5 and 6, the support 72 may connect the multiple through-holes 66 with one another on the second surface 6B. In a second modification, the support 72 connects the multiple through-holes 66 with one another on the second surface 6B to increase the connection between the bonding member 71 and the support 72. This structure more appropriately supports the bracket 6 on the glass substrate 1.

### Third Modification of First Embodiment

As shown in FIG. 7, the bonding member 71 and the support 72 may have a recess 73 from an outer surface of the support 72 toward the corresponding through-hole 66. To form the recess 73, for example, a core in the form of a rod is placed in the through-hole 66, and the core has a smaller diameter than the through-hole 66. The recess 73 extends from the support 72 toward the bonding member 71. This reduces the amount of the adhesive used for the bonding member 71 and the support 72.

### Second Embodiment

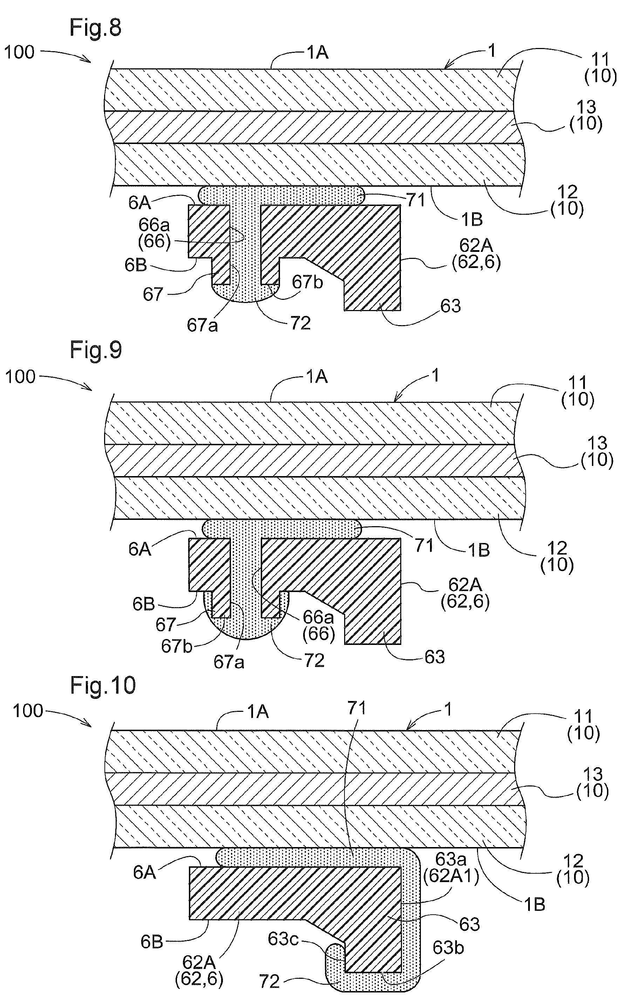

In a second embodiment, as shown in FIG. 8, the second surface 6B of the bracket 6 includes a third protrusion 67 (an example of the protrusion) protruding away from the first surface 6A. The bracket 6 has the through-holes 66 connecting the first surface 6A with the second surface 6B, and the third protrusion 67 protrudes from an outer edge 66a of each through-hole 66. The outer edge 66a of the through-hole 66 defines the boundary between the through-hole 66 and a base plane of the second surface 6B. The third protrusion 67 has a hole 67a continuous with the through-hole 66. The support 72 is connected to the bonding member 71 through the through-hole 66 and the hole 67a, and is in contact with a distal end face 67b of the third protrusion 67. The distal end face 67b defines a part of the second surface 6B of the bracket 6.

When the bracket 6 has the through-holes 66 each connecting the first surface 6A with the second surface 6B, and when the third protrusion 67 protrudes from the outer edge 66a of each through-hole 66 as in the present embodiment, the bonding member 71 and the support 72 can be connected in the through-hole 66 and in the hole 67a (inside) in the third protrusion 67 continuous with the through-hole 66. This reliably connects the bonding member 71 and the support 72 to each other.

When the second surface 6B of the bracket 6 includes the third protrusion 67 protruding away from the first surface 6A and when the support 72 is in contact with the third protrusion 67, the support 72 can be connected to the bonding member 71 through the third protrusion 67 on the bracket 6. This increases the area of contact of the bonding member 71 and the support 72 with the bracket 6. The third protrusion 67 protrudes from the second surface 6B. The cover 7 holding the camera 8 may be engaged with the third protrusion 67. In this case, the third protrusion 67 is likely to receive a concentrated load of the camera 8. The support 72 in contact with the third protrusion 67 can reliably prevent the bracket 6 from dropping. The bracket 6 can thus be held more firmly by the bonding member 71 and the support 72.

### Modification of Second Embodiment

As shown in FIG. 9, the support 72 may be in contact with the third protrusion 67, and may be continuous with an area of the second surface 6B. The area is adjacent to the third protrusion 67. In this modification, the support 72 is in contact with the extended area of the second surface 6B of the bracket 6, allowing the bracket 6 to be held still more firmly by the support 72.

### Third Embodiment

In a third embodiment, as shown in FIG. 10, the bonding member 71 and the support 72 are connected through an outer surface 63a of the first protrusion 63 on the outer edge 62A1 of the bracket 6. The first protrusion 63 has the outer surface 63a on the outer edge of the bracket 6, a distal end face 63b, and an inner surface 63c opposite to the outer surface 63a. The bonding member 71 extends from the first surface 6A to the outer surface 63a, and the support 72 is disposed from the outer surface 63a to the inner surface 63c through the distal end face 63b. The distal end face 63b and the inner surface 63c define a part of the second surface 6B of the bracket 6. Although not shown, the support 72 may extend to the distal end face 63b of the first protrusion 63, or may be continuous with an area of the second surface 6B, and the area is adjacent to the first protrusion 63.

When the cover 7 holding the camera 8 is attached to the bracket 6 and supported, the bracket 6 is likely to receive a greater load of the camera 8 at outer edge positions of the bracket 6. In the present embodiment, the first protrusion 63 in contact with the support 72 is disposed on the outer edge 62A1 of the bracket 6. This structure allows the first protrusion 63 to increase the strength of the outer edge 62A1 of the bracket 6 and allows the support 72 placed on the first protrusion 63 to appropriately support the bracket 6.

### Modification of Third Embodiment

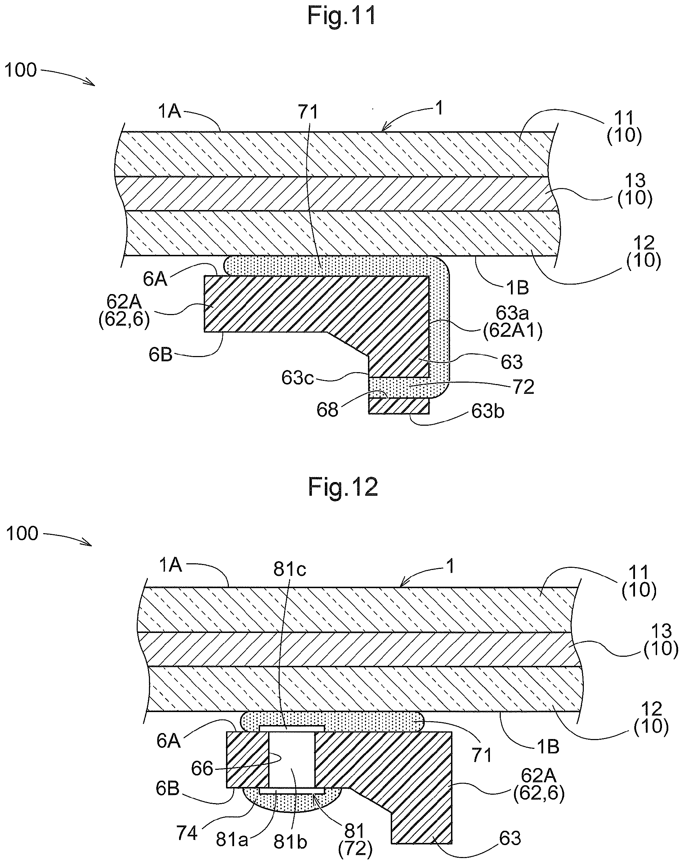

As shown in FIG. 11, in this modification, the first protrusion 63 has a connection hole 68 connecting the outer surface 63a, which is continuous with the first surface 6A, with the inner surface 63c. The connection hole 68 extends through the first protrusion 63 in a direction intersecting with a direction in which the first protrusion 63 protrudes. The bonding member 71 and the support 72 are connected through the outer surface 63a of the first protrusion 63, and the bonding member 71 enters (fills) the connection hole 68 to form the support 72. The connection hole 68 defines a part of the second surface 6B of the bracket 6. Although not shown, the support 72 may extend to be in contact with the inner surface 63c of the first protrusion 63, or may be continuous with the area of the second surface 6B. The area is adjacent to the first protrusion 63.

In this modification, the bonding member 71 and the support 72 are connected through the outer surface 63a of the first protrusion 63. This structure easily connects the bonding member 71 and the support 72 to each other. The support 72 includes the bonding member 71 filling the connection hole 68 in the first protrusion 63 on the outer edge 62A1 of the bracket 6. The bonding member 71 (support 72) in the connection hole 68 can thus support the bracket 6 still more firmly.

### Fourth Embodiment

In a fourth embodiment, as shown in FIG. 12, the support 72 is a member formed from a material different from the material of the bonding member 71. In the present embodiment, as in the first embodiment, the bracket 6 has the through-holes 66 each connecting the first surface 6A with the second surface 6B. In the present embodiment, the support 72 is a rivet 81 including a head 81a, a shank 81b, and a distal end 81c. The rivet 81 is formed from, for example, a resin or metal. The shank 81b has substantially the same shape as each through-hole 66. Examples of the resin for the rivet 81 include a PBT resin and a polyamide resin including nylon. Examples of the metal for the rivet 81 include iron, stainless steel, and brass. The rivet 81 is received in the corresponding through-hole 66 in the bracket 6. The distal end 81c is then deformed with, for example, an attachment tool to fix the rivet 81 to the bracket 6. After the rivet 81 is fixed to the bracket 6, the bracket 6 with the bonding member 71 on the first surface 6Ais then pressed against the inner surface 1B of the glass substrate 1, forming the vehicle glass module 100. The distal end 81c of the rivet 81 is thus connected to the bonding member 71, and the head 81a of the rivet 81 comes into contact with the second surface 6B of the bracket 6. In this structure, the rivet 81 connected to the bonding member 71 with the head 81a in contact with the second surface 6B supports the weight of the bracket 6.

In the present embodiment, a second bonding member 74 is further disposed on the head 81a of the rivet 81 and in an area of the second surface 6B, and the area is adjacent to the head 81a. In other words, the support 72 includes the rivet 81 and the second bonding member 74. Similarly to the bonding member 71, the second bonding member 74 is an adhesive, and is formed from the same material as the bonding member 71. The rivet 81 and the second bonding member 74 both in contact with the second surface 6B support the weight of the bracket 6.

When the support 72 is a member formed from a material different from the material of the bonding member 71 as in the present embodiment, the support 72 can be a member selected from a wider range of members, and the member as the support 72 can be appropriately selected based on, for example, the weight of the device to be attached to the bracket 6. Further, when the support 72 includes multiple members (the rivet 81 and the second bonding member 74) formed from different materials as in the present embodiment, the support 72 may include members selected appropriately for the respective areas of the support 72. For example, a member for a connection area of the support 72 with the bonding member 71 may be different from a member for an area of the support 72 in contact with the second surface 6B of the bracket 6.

### First Modification of Fourth Embodiment

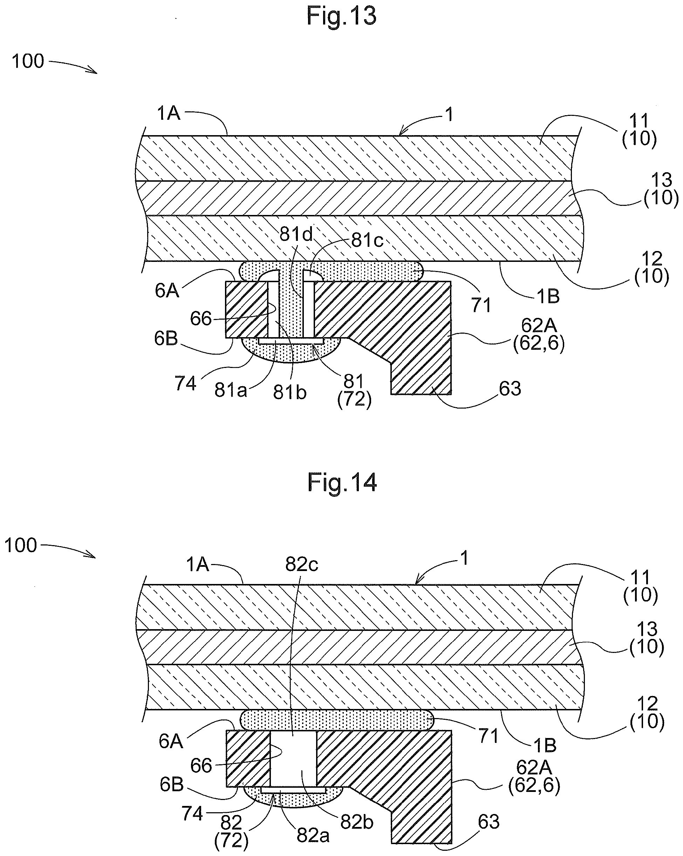

As shown in FIG. 13, the rivet 81 may be in the form of a split pin with the shank 81b and the distal end 81c divided by a split groove 81d. The distal end 81c of the rivet 81 is tapered. The rivet 81 with the above structure has the distal end 81c passed through the through-hole 66 to be released from the through-hole 66 and expand toward the outer periphery, automatically engaged with the first surface 6A of the bracket 6. In a first modification, the rivet 81 can be simply fixed to the bracket 6 without any attachment tool. As in the fourth embodiment, the rivet 81 in the first modification is also formed from a resin or metal.

In the first modification, the through-hole 66 in the bracket 6 may be, for example, tapered from the second surface 6B toward the first surface 6A with its inner diameter larger at its opening end on the second surface 6B and gradually reduced toward the first surface 6A. The rivet 81 with this structure has the distal end 81c guided through the through-hole 66 from the second surface 6B to the first surface 6A, and can be easily attached to the bracket 6 through the through-hole 66.

In the first modification as well, the second bonding member 74 is further disposed on the head 81a of the rivet 81 and in an area of the second surface 6B, and the area is adjacent to the head 81a. In other words, the support 72 includes the rivet 81 and the second bonding member 74. The rivet 81 and the second bonding member 74 both in contact with the second surface 6B support the weight of the bracket 6. In the structure of this first modification, the bonding member 71 is disposed inside the shank 81b of the rivet 81 in the through-hole 66, and the rivet 81 can thus be connected to the bonding member 71 more firmly.

### Second Modification of Fourth Embodiment

As shown in FIG. 14, the support 72 may include a bolt 82 as a member formed from a material different from the material of the bonding member 71. The bolt 82 includes a head 82a, a shank 82b, and a distal end 82c. The bolt 82 in the first modification is formed from the same material as the rivet 81 in the fourth embodiment, and the shank 82b has substantially the same shape as each through-hole 66. The bolt 82 is screwed into the through-hole 66 from the second surface 6B to be fixed in the through-hole 66. The bolt 82 has its distal end 82c connected to the bonding member 71 inside the through-hole 66.

In a second modification, the second bonding member 74 is further disposed on the head 82a of the bolt 82 and in an area of the second surface 6B, and the area is adjacent to the head 82a. In other words, the support 72 includes the bolt 82 and the second bonding member 74, and the head 82a of the bolt 82 and the second bonding member 74 both in contact with the second surface 6B support the weight of the bracket 6.

### Third Modification of Fourth Embodiment

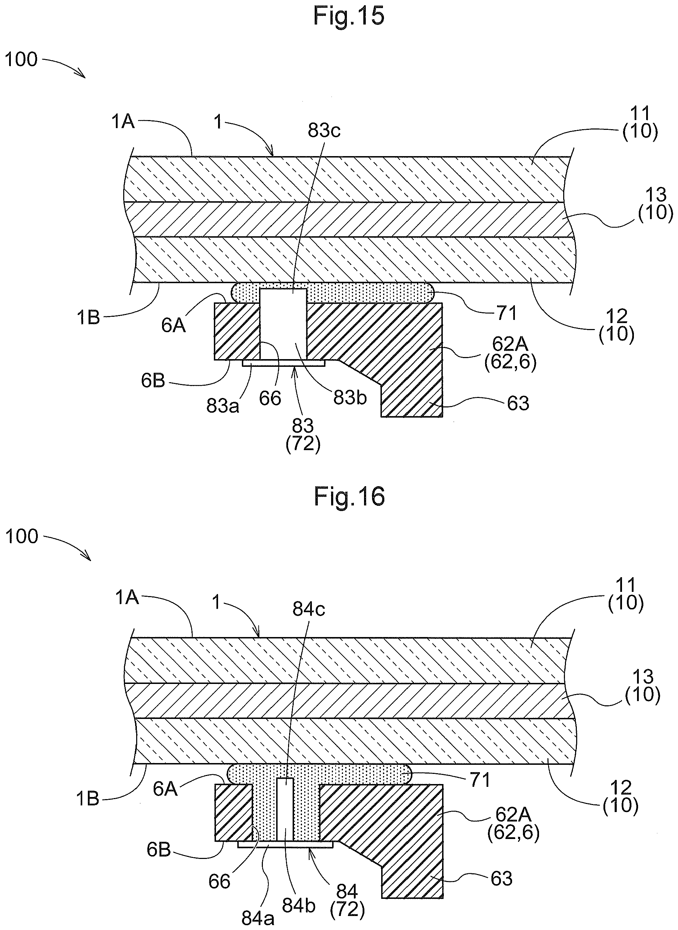

As shown in FIG. 15, the support 72 may include a bolt 83 as a member formed from a material different from the material of the bonding member 71. The bolt 83 may be closer to the inner surface 1B of the glass substrate 1 than to the first surface 6A. The bolt 83 includes a head 83a, a shank 83b, and a distal end 83c. The bolt 83 in the second modification is formed from the same material as the rivet 81 in the fourth embodiment, and the shank 82b has substantially the same shape as each through-hole 66. The bolt 83 is screwed into the through-hole 66 from the second surface 6B to be fixed in the through-hole 66. The bolt 83 has the distal end 82c protruding from the through-hole 66, and is connected to the bonding member 71 between the first surface 6A and the inner surface 1B. The head 83a of the bolt 83 is in contact with the second surface 6B to support the weight of the bracket 6. In the structure according to the second modification, the bolt 83 is more easily to come in contact with the bonding member 71 than in the first modification. The bolt 83 can thus be connected to the bonding member 71 more firmly.

### Fourth Modification of Fourth Embodiment

As shown in FIG. 16, the support 72 may include a bolt 84 as a member formed from a material different from the material of the bonding member 71. The bolt 84 may include a shank 84b and a distal end 84c each having a smaller diameter than the through-hole 66. The bolt 84 in the third modification is formed from the same material as the rivet 81 in the fourth embodiment. The shank 84b and the distal end 84c are received in the through-hole 66 filled with the bonding member 71, followed by the bonding member 71 solidifying to connect the bolt 84 to the bonding member 71. In this structure, the bolt 84 has a head 84a in contact with the second surface 6B to support the weight of the bracket 6. In the structure according to the third modification, the bonding member 71 surrounds the shank 84b of the bolt 84 in the through-hole 66, and the bolt 84 can thus be connected to the bonding member 71 more firmly. Other Embodiments
(1) When each of the bonding member 71 and the support 72 is an adhesive, or when the support 72 is formed from a material other than the adhesive, the bonding member 71 may have a smaller difference in linear expansion coefficient with the support 72 than with the first surface 6A of the bracket 6. In this structure, when the vehicle glass module 100 is affected by varying temperatures resulting from, for example, exposure to sunlight, the bonding member 71 has a smaller shearing stress with the support 72 than with the first surface 6A of the bracket 6. In the above structure, when the bonding strength between the bracket 6 and the bonding member 71 is reduced, the support 72 connected to the bonding member 71 can support the bracket 6 to prevent the bracket 6 from dropping. This structure more appropriately supports the bracket 6 on the glass substrate 1.
(2) In the fourth embodiment and its second and third modifications, the rivet 81, the bolt 82, and the bolt 83 as the support 72 include the respective bodies 81b, 82b, and 83b that are solid. In some embodiments, each of the rivet 81, the bolt 82, and the bolt 83 may have a through-hole connecting the first surface 6A and the second surface 6B. In this structure, each of the rivet 81, the bolt 82, and the bolt 83 can connect the bonding member 71 and the second bonding member 74 through the corresponding through-hole defined inside the rivet 81 or the bolt 82 or 83. The support 72 including the second bonding member 74 and the rivet 81 or other members can be connected to the bonding member 71 more firmly. Further, having a recess on the first surface 6A or on the second surface 6B, each of the rivet 81, the bolt 82, and the bolt 83 has an increased area bonded to the bonding member 71 or to the second bonding member 74. In this structure, each of the rivet 81, the bolt 82, and the bolt 83 can thus be more firmly connected to the bonding member 71 or to the second bonding member 74.
(3) In the fourth embodiment and its first modification, the second bonding member 74 is further disposed on the head 81a of the rivet 81 and in the area of the second surface 6B, and the area is adjacent to the head 81a. In some embodiments, the second bonding member 74 may be eliminated.
(4) In the above embodiments, the bracket 6 is bonded to the shield layer 2 in the glass substrate 1. In some embodiments, the glass substrate 1 may not include the shield layer 2. When the glass substrate 1 includes no shield layer 2, or when the glass substrate 1 includes the shield layer 2 but the shield layer 2 is not disposed at the bonding position of the bracket 6, the bracket 6 may be bonded directly to the inner glass plate 12 of the laminated glass plate 10 in the glass substrate 1.
(5) In the above embodiments, the vehicle glass module 100 supports the camera 8 as the information obtainer. In some embodiments, the information obtainer may be one of various sensors including a range sensor, such as a laser radar or a supersonic sensor, or a combination of multiple information obtainers.
(6) In the above embodiments, the glass substrate 1 includes the laminated glass plate 10 as the outer glass plate 11 and the inner glass plate 12 bonded to each other with the intermediate film 13 between them. In some embodiments, the glass substrate 1 may be, for example, a single glass plate such as a rear glass plate in an automobile. The glass substrate 1 may have any shape other than the curved shape.

### INDUSTRIAL APPLICABILITY

The technique according to one or more embodiments of the present invention is applicable to a vehicle glass module for supporting an information obtainer in a vehicle, and a method for manufacturing the vehicle glass module.

### REFERENCE SIGNS LIST

1 glass substrate
6 bracket
6A first surface
6B second surface
10 laminated glass plate
11 outer glass plate
12 inner glass plate
13 intermediate film
61 attachment hole
62 body
62Aupper side
62A1 outer edge
62B lower side
63 first protrusion (protrusion)
64 second protrusion (protrusion)
66 through-hole
67 third protrusion (protrusion)
67a distal end
68 connection hole
71 bonding member
72 support
74 second bonding member
81 rivet
82, 83, 84 bolt
100 vehicle glass module

## Claims

1. A vehicle glass module for supporting an information obtainer in a vehicle, the vehicle glass module comprising:
a glass substrate having an outer surface and an inner surface; and
a bracket having a first surface bonded to the inner surface of the glass substrate with a bonding member and a second surface opposite to the glass substrate,
the bracket including a support connected to the bonding member, the support being in contact with the second surface and supporting a weight of the bracket.

2. The vehicle glass module according to claim 1, wherein
the bonding member is an adhesive, and
the support comprises a same material as the adhesive, and the support is continuous with the adhesive.

3. The vehicle glass module according to claim 1 or claim 2, wherein
the bracket has at least one through-hole connecting the first surface with the second surface,
the bonding member and the support are connected to each other through the at least one through-hole,
the bonding member is disposed in the at least one through-hole and in an area of the first surface, and the area is adjacent to the at least one through-hole, and
the support is disposed in the at least one through-hole and in an area of the second surface, and the area is adjacent to the at least one through-hole.

4. The vehicle glass module according to claim 3, wherein
the bracket has the at least one through-hole being a plurality of through-holes, and
the support connects the plurality of through-holes with one another on the second surface.

5. The vehicle glass module according to claim 3 or claim 4, wherein
the at least one through-hole is flared from the first surface toward the second surface.

6. The vehicle glass module according to any one of claims 1 to 5, wherein
the second surface includes a protrusion protruding away from the first surface, and
the support is in contact with the protrusion.

7. The vehicle glass module according to claim 6, wherein
the support is continuous with an area of the second surface, and the area is adjacent to the protrusion.

8. The vehicle glass module according to claim 6 or claim 7, wherein
the bracket has a through-hole connecting the first surface with the second surface, and
the protrusion protrudes from an outer edge of the through-hole.

9. The vehicle glass module according to any one of claims 6 to 8, wherein
the protrusion is on an outer edge of the bracket.

10. The vehicle glass module according to any one of claims 6 to 8, wherein
the protrusion is on an outer edge of the bracket,
the protrusion has a connection hole extending through the protrusion in a direction intersecting with a direction in which the protrusion protrudes, and
the support includes the bonding member entering the connection hole.

11. The vehicle glass module according to any one of claims 1 to 10, wherein
the bonding member has a smaller difference in linear expansion coefficient with the support than with the first surface.

12. The vehicle glass module according to any one of claims 1 to 11, wherein
the support includes a plurality of members comprising different materials.

13. The vehicle glass module according to any one of claims 1 to 12, wherein
the support includes a member comprising a material different from a material of the bonding member.
